# EUROPÄISCHE PATENTSCHRIFT

(11) **EP 2 988 974 B1**
(45) Veröffentlichungstag und Bekanntmachung des Hinweises auf die Patenterteilung: **19.02.2020**
(21) Anmeldenummer: 14715270.6
(22) Anmeldetag: 03.04.2014
(51) Int. Cl.: B60R 16/02, B60L 3/00

(54) **VORRICHTUNG UND VERFAHREN ZUM ERKENNEN EINES ZUSTANDS EINES IN EINEM FAHRZEUG ANGEORDNETEN ENERGIESPEICHERS**
DEVICE AND METHOD FOR DETECTING A STATE OF AN ENERGY STORE ARRANGED IN A VEHICLE
DISPOSITIF ET PROCÉDÉ D'IDENTIFICATION D'UN ÉTAT D'UN ACCUMULATEUR D'ÉNERGIE MONTÉ DANS UN VÉHICULE

(30) Priorität: 24.04.2013 DE 102013207410
(43) Veröffentlichungstag der Anmeldung: 02.03.2016
(73) Patentinhaber: Bayerische Motoren Werke Aktiengesellschaft, 80809 München (DE)
(72) Erfinder: DELPHO, Björn, 80469 München (DE)
(86) Internationale Anmeldenummer: PCT/EP2014/056634
(87) Internationale Veröffentlichungsnummer: WO 2014/173645

(56) Entgegenhaltungen:
- EP-A1- 1 683 681
- DE-A1-102011 076 757

## Beschreibung

Die Erfindung betrifft eine Vorrichtung und ein Verfahren zum Erkennen eines Zustands eines in einem Fahrzeug angeordneten Energiespeichers.

Der Ausstattungsgrad von Fahrzeugen mit elektrischen Verbrauchern, die über ein Fahrzeugbordnetz gespeist sind, nimmt immer mehr zu. Aus diesem Grund gewinnt eine sichere Energieversorgung und somit eine Stabilisierung des Fahrzeugbordnetzes zunehmend an Bedeutung. Insbesondere mit Blick auf sicherheitsrelevante elektrische Verbraucher ist dies unerlässlich. Sicherheitsrelevante elektrische Verbraucher sind solche Verbraucher, insbesondere Steuer- und/oder Regelungseinrichtungen, die Einfluss auf die Unversehrtheit der Fahrzeuginsassen, sowie anderer Beteiligter am Straßenverkehr haben. Daraus leitet sich ab, dass ein Fahrzeugbordnetz so ausgelegt sein muss, dass sicherheitsrelevante Verbraucher mindestens so lange mit elektrischer Energie versorgt werden, bis diese bei einem im Fahrzeugbordnetz auftretenden Fehlerfall einen sicheren Zustand eingenommen haben, beispielsweise abgeschaltet sind, bzw. bis das Fahrzeug sicher abgestellt ist. Beispiele für sicherheitsrelevante Verbraucher sind unter anderem Steuer- und/oder Regelungseinrichtungen, die mittels eines von einer Recheneinheit abgearbeiteten Steuer- und/oder Regelalgorithmus den Fahrer unterstützende Lenk- oder Bremseneingriffe durchführen.

Um die vorstehend dargelegten Anforderungen an die Versorgung sicherheitsrelevanter Verbraucher mit elektrischer Energie sicherzustellen, sind bereits unterschiedliche Maßnahmen bekannt. So kann ein Fahrzeug mit einem zusätzlichen, d.h. zweiten Bordnetz ausgestattet sein, das von dem eigentlichen, für den Start eines Verbrennungsmotors vorgesehenen Bordnetz entkoppelt ist, und über das die sicherheitsrelevanten Verbraucher versorgt werden. Ebenso sind modifizierte Bordnetztopologien bekannt, die zusätzlich zu den aus der gängigen Bordnetztopologie bekannten Komponenten Generator und Bordnetzbatterie, eine weitere zweite Batterie aufweisen, die beispielsweise für den verbrauchsintensiven Motorstart vorgesehen ist.

Bei einigen sicherheitsrelevanten Steuer- und/oder Regelungseinrichtungen kommt hinzu, dass diese im Rahmen des jeweils hinterlegten Steuerungs- und/oder Regelungskonzepts mit den jeweils vorhandenen Aktuatoren hochdynamische Stelleingriffe durchführen, was dazu führt, dass die den Steuer- und/oder Regelungseinrichtungen zugeführten Versorgungsströme zwangsläufig hochdynamische Verläufe aufweisen, d.h. große Strompeaks bzw. steile Stromanstiege. Für gewöhnlich kann ein in einem Fahrzeugbordnetz angeordneter Generator für sich allein solch hochdynamische Versorgungsströme nicht bereitstellen. Grund hierfür ist seine konstruktiv bedingte Trägheit, wegen der er längere Zeit benötigt, um zusätzliche Energie durch Erregung aufzubauen. Zur Versorgung solcher Stromspitzenlasten erfolgt daher ein Zugriff auf die in einem Fahrzeugbordnetz vorhandene Batterie, bei der es sich für gewöhnlich um die Starterbatterie handelt. Der Rückgriff auf einen Energiespeicher, zumal wenn dieser als hochdynamische Batterie ausgebildet ist, hat den Vorteil, dass die Grundspannung des Fahrzeugbordnetzes auf konstantem Niveau gehalten werden kann.

Aus den vorstehend beschriebenen Gründen gewinnt die Batteriediagnose als Teil des Fahrzeugenergiemanagements zunehmend an Bedeutung. Mit einer Batteriediagnose soll ein Zustand einer in einem Fahrzeug angeordneten Batterie, vorzugsweise der in einem Fahrzeugbordnetz enthaltenen Starterbatterie, erkannt werden, um somit Aussagen über den Ladezustand (State of Charge, SOC), den Alterungszustand (State of Health, SOH) oder über die Funktionalität der Batterie allgemein (State of Function, SOF) zu liefern.

Aus dem Stand der Technik sind verschiedene Maßnahmen bekannt, die zum Erkennen eines Zustands einer in einem Fahrzeug verbauten Batterie eingesetzt werden können.

In der Regel werden bei diesen Maßnahmen für eine möglichst exakte Batteriezustandserkennung jeweils Messwerte für den Batteriestrom, die Batteriespannung und die Batterietemperatur erfasst und ausgewertet, wie dies beispielsweise aus der DE 10 2009 002 466 A1 bekannt ist. Diese Messwerte können beispielsweise mit Hilfe eines intelligenten, an der Batterie angeordneten Batteriesensors erfasst werden. Der Einsatz eines solchen Sensors verursacht allerdings zusätzliche Kosten.

Auch sind Maßnahmen bekannt, bei denen der Innenwiderstand der Batterie ermittelt und für eine Erkennung des Batteriezustands herangezogen wird. Solch eine Vorgehensweise ist in der DE 102 05 120 B4 beschrieben. Für das Ermitteln des Innenwiderstands und somit das Erkennen des Batteriezustands sind zusätzliche elektronische Komponenten erforderlich, wodurch zusätzliche Kosten verursacht werden.

Bei wiederum anderen Maßnahmen werden sowohl für einen Generator als auch für die zu überwachende Batterie, die beide Teile eines Fahrzeugbordnetzes sind, Spannungswerte erfasst. Anhand der Welligkeit der Generatorspannung und der Welligkeit der Batteriespannung wird dann eine Batteriezustandserkennung vorgenommen. Eine entsprechende Vorgehensweise ist in der EP 1 361 448 B1 beschrieben. Solche Diagnoseverfahren lassen sich jedoch bei zukünftigen Generatoren nur noch bedingt einsetzen, da bei Generatoren die Entwicklung dahin geht, dass zukünftige Generatoren nicht mehr nur dreiphasig ausgebildet sind, sondern über wesentlich mehr Phasen verfügen, beispielsweise sechs Phasen. Somit fällt bei zukünftigen Generatoren die Welligkeit der Generatorspannung geringer aus, weswegen keine deutlich ausgeprägte Welligkeit der Generatorspannung mehr für die Batteriediagnose zur Verfügung steht.

Aus der DE 101 22 767 A1 wiederum ist eine Maßnahme bekannt, bei der ein Kondensator parallel zu der Bordnetzbatterie geschaltet ist, und die Batteriediagnose anhand des erfassten Kondensatorstroms durchgeführt wird. Dieser zusätzlich vorzusehende Kondensator führt allerdings zu höheren Kosten.

Es ist daher eine Aufgabe der vorliegenden Erfindung, eine Vorrichtung und ein Verfahren der eingangs genannten Art bereitzustellen, mit dem in einfacher Art und Weise und somit kostengünstig, ein Zustand eines in einem Fahrzeug angeordneten Energiespeichers genau und zuverlässig erkannt werden kann. Zudem soll dieses Erkennen unabhängig von der konkreten Ausgestaltung eines in einem Fahrzeugbordnetz enthaltenen Generators möglich sein.

Diese Aufgabe wird durch eine Vorrichtung der eingangs genannten Art gelöst, die eine Erkennungseinheit aufweist, die dazu ausgebildet ist, in Abhängigkeit zumindest einer ihr zugeführten Versorgungszustandsgröße eine Energiespeicherzustandsgröße zu ermitteln, die den Zustand des Energiespeichers repräsentiert, wobei das Fahrzeug eine Anzahl von im Fahrzeug verteilt angeordneter, von dem Energiespeicher gespeister elektrischer Verbraucher aufweist, wobei die elektrischen Verbraucher jeweils eine Erfassungseinheit aufweisen, wobei die Erfassungseinheiten dazu ausgebildet sind, zumindest eine Versorgungszustandsgröße zu ermitteln, die einen Versorgungszustand des jeweiligen elektrischen Verbrauchers repräsentiert oder charakterisiert, der beim Speisen des elektrischen Verbrauchers durch den Energiespeicher auftritt.

Die Aufgabe wird ferner durch ein Verfahren der eingangs genannten Art gelöst, das bei einem Fahrzeug zum Einsatz kommen soll, das eine Anzahl von im Fahrzeug verteilt angeordneter, von dem Energiespeicher gespeister elektrischer Verbraucher aufweist, die jeweils eine Erfassungseinheit aufweisen, und bei dem nachfolgende Schritte ausgeführt werden:
- Ermitteln zumindest einer Versorgungszustandsgröße mit einer der Erfassungseinheiten, wobei die Versorgungszustandsgröße einen Versorgungszustand des jeweiligen elektrischen Verbrauchers repräsentiert oder charakterisiert, der beim Speisen des elektrischen Verbrauchers durch den Energiespeicher auftritt,
- Zuführen zumindest einer Versorgungszustandsgröße zu einer Erkennungseinheit, und
- Ermitteln einer Energiespeicherzustandsgröße in der Erkennungseinheit, in Abhängigkeit der zumindest einen zugeführten Versorgungszustandsgröße, wobei die Energiespeicherzustandsgröße den Zustand des Energiespeichers repräsentiert.

Der Vorrichtung und dem Verfahren liegt die Idee zugrunde, für das Erkennen eines Zustands eines in einem Fahrzeug angeordneten Energiespeichers, einen verteilten Aufbau zu wählen, bei dem die einzelnen hierfür benötigten Komponenten innerhalb des Fahrzeugs verteilt angeordnet sind, und somit eine verteilte bzw. dezentrale Energiespeicherdiagnose zu realisieren. Hierbei werden der Erkennungseinheit die für das Ermitteln einer Energiespeicherzustandsgröße und somit das Erkennen des Zustands des Energiespeichers benötigten Versorgungszustandsgrößen ausgehend von einzelnen elektrischen Verbrauchern des Bordnetzes zur Verfügung gestellt. Es ist zwar eine die Auswertung durchführende Erkennungseinheit vorhanden, der verteilte bzw. dezentrale Charakter der Energiespeicherdiagnose rührt jedoch daher, dass die Versorgungszustandsgrößen von elektrischen Verbrauchern bereitgestellt werden, die innerhalb des Fahrzeugs verteilt angeordnet sind. Dadurch dass von mehreren elektrischen Verbrauchern Versorgungszustandsgrößen bereitgestellt werden, anhand derer die Energiespeicherzustandsgröße ermittelt und somit der Energiespeicherzustand erkannt bzw. die Energiespeicherdiagnose durchgeführt wird, ist sichergestellt, dass ggf. vorliegende Fehler oder Störungen im Bordnetz, wie sie beispielsweise durch eine fehlerhafte Verkabelung oder einen fehlerhaften Stecker verursacht sein können, bei der Energiespeicherdiagnose unberücksichtigt bleiben bzw. nicht zu einer Verfälschung des Diagnoseergebnisses führen. Somit kann ein ggf. defekter Energiespeicher als Verursacher eines Bordnetzfehlers eindeutig identifiziert werden. Der Energiespeicherzustand kann genau und zuverlässig erkannt werden bzw. die Energiespeicherdiagnose liefert ein genaues und zuverlässiges Ergebnis.

Dadurch dass auf ohnehin im Fahrzeug verbaute elektrische Verbraucher zurückgegriffen wird, die mit entsprechend ausgebildeten Erfassungseinheiten ausgestattet sind, kann auf zusätzliche Sensoren, wie beispielsweise die vorstehend erwähnten intelligenten, an einer Batterie angeordneten Batteriesensoren, verzichtet werden, was gegenüber Lösungen, die auf dem Einsatz solcher zusätzlicher Sensoren basieren, zu einer Kosteneinsparung führt. Mit dieser Maßnahme bzw. mit diesem Ansatz gehen aber noch weitere Vorteile einher: dadurch dass keine zusätzlichen Sensoren benötigt werden, ist die Anzahl der für die Energiespeicherdiagnose benötigten Komponenten und somit die Anzahl möglicher Fehlerquellen auf ein Minimum reduziert, was dazu führt, dass die erfindungsgemäße Vorrichtung und das erfindungsgemäße Verfahren in ihrem Aufbau bzw. in ihrer Realsierung einfach und robust sind und somit zuverlässige Diagnoseergebnisse liefern. Ein weiterer Vorteil besteht darin, dass ein Fahrzeug für gewöhnlich über eine große Anzahl elektrischer Verbraucher verfügt, die mit einer entsprechenden Erfassungseinheit ausgestattet sind, was wiederum bedeutet, dass eine große Anzahl von Versorgungszustandsgrößen bereitgestellt und in der Erkennungseinheit ausgewertet werden können. Somit ist Redundanz gegeben und eine stabile und qualitativ hochwertige Energiespeicherdiagnose bzw. eine Energiespeicherdiagnose mit hoher Güte möglich bzw. sichergestellt. Die Tatsache, dass keine zusätzlichen Sensoren benötigt werden, führt zudem dazu, dass für die bauliche Umsetzung der erfindungsgemäßen Vorrichtung innerhalb des Fahrzeugs weniger Bauraum benötigt wird bzw. es sich um eine bauraumneutrale Lösung handelt.

Ein weiterer Vorteil der erfindungsgemäßen Vorrichtung bzw. des erfindungsgemäßen Verfahrens besteht darin, dass dadurch ein situationsbedingt schnelleres Erkennen des Zustands eines Energiespeichers bzw. eine schnellere Energiespeicherdiagnose ermöglicht wird. Dies ist beispielsweise und insbesondere dann möglich, und somit von Vorteil, wenn der Energiespeicher des Fahrzeugbordnetzes nicht mehr startfähig ist. In dieser Konstellation muss der Verbrennungsmotor des Fahrzeugs mittels Starthilfe gestartet werden. Der nicht mehr startfähige Energiespeicher liefert dabei über einen längeren Zeitraum, unter anderem mehrere Minuten lang, keinen Beitrag zur Bordnetzstabilität, da dieser zunächst aufgeladen werden muss. Somit würde eine auf dem Energiespeicherstrom und/oder der Energiespeicherspannung basierende, modellgestützte Energiespeicherdiagnose erst nach einer längeren Zeitdauer, die von der modellgestützten Diagnose herrührt, erkennen lassen, dass ein problematischer Energiespeicherzustand vorliegt und folglich innerhalb dieses Zeitraums keine verlässlichen Diagnoseergebnisse liefern. Stattdessen kann die offenbarte, verteilte Energiespeicherdiagnose sofort und vor allem verlässliche Ergebnisse liefern.

Die obengenannte Aufgabe ist daher vollständig gelöst.

In der Erfindung handelt es sich bei den elektrischen Verbrauchern um Steuer- und/oder Regelungseinrichtungen, mit denen jeweils eine das Fahrverhalten des Fahrzeugs kennzeichnende und/oder beeinflussende Größe einstellbar ist. Solche Steuer- und/oder Regelungseinrichtungen sind zum einen in heutigen Fahrzeugen in größerer Anzahl vorhanden. Zum anderen verfügen solche Steuer- und/oder Regelungseinrichtungen in der Regel, wenn nicht sogar durchgängig über Erfassungseinheiten, mit denen der jeweilige Versorgungszustand erfasst werden kann. Somit kann eine Energiespeicherdiagnose ohne zusätzliche Sensoren und somit kostengünstig und bauraumoptimiert realisiert werden. Zudem ist diese Diagnose aufgrund der großen Anzahl von zur Verfügung stehender Versorgungszustandsgrößen und der verlässlichen Ermittlung robust, was zuverlässige Diagnoseergebnisse ermöglicht.

Bei den Steuer- und/oder Regelungseinrichtungen kann es sich sowohl um sicherheitsrelevante als auch um nicht sicherheitsrelevante Steuer- und/oder Regelungseinrichtungen handeln. Bei nicht sicherheitsrelevanten Steuer- und/oder Regelungseinrichtungen kann es sich unter anderem um sogenannte Komfortsysteme handeln, beispielsweise eine Sitzheizung, eine Sitzverstellung oder eine Einrichtung zur Heckscheibenheizung. Allgemein formuliert: Komfortsysteme die eine Fahrgastzellen bezogene Anwendung betreffen. Die Vorrichtung und das Verfahren können aber auch im Zusammenhang mit Komfortsystemen eingesetzt werden, die dazu ausgebildet sind, Eingriffe in die Fahrzeugdynamik durchzuführen.

Wie bereits ausgeführt, kann es sich bei den sicherheitsrelevanten Steuer- und/oder Regelungseinrichtungen um solche handeln, die mittels eines von einer Recheneinheit abgearbeiteten Steuer- und/oder Regelalgorithmus den Fahrer unterstützende Lenk- oder Bremseneingriffe durchführen, wobei es für solch einen Eingriff nicht Voraussetzung ist, dass ein entsprechender vom Fahrer initiierte Eingriff vorliegt. Als Beispiele für sicherheitsrelevante Steuer- und/oder Regelungseinrichtungen seien folgende Einrichtungen genannt:
- Eine elektrische Servolenkung (Electric Power Steering; EPS), auch als elektrische Lenkkraftunterstützung bezeichnet, mit der zur Unterstützung des Fahrers Zusatzlenkmomente überlagert werden können.
- Eine Fahrstabilitätseinrichtung, mit der ein Fahrzeug sowohl hinsichtlich der Längsdynamik, also beim Beschleunigen und Bremsen (Radschlupfregelung), als auch hinsichtlich der Querdynamik, also beim Kurvenfahren (Gierratenregelung), stabilisiert werden kann. Zu diesem Zweck werden Bremsen- und/oder Motoreingriffe durchgeführt. Bei Fahrzeugen der Anmelderin kommen solche Fahrstabilitätseinrichtungen unter der Bezeichnung DSC zum Einsatz.
- Eine elektrische Parkbremse.
- Eine aktive Vorderradlenkeinrichtung (Active Front Steeering, AFS), mit der sich sowohl Lenkassistenzfunktionen als auch Fahrstabilisierungsfunktionen umsetzen lassen. Im Rahmen der Lenkassistenzfunktionen kann die Lenkübersetzung variiert werden, so dass bezogen auf den vom Fahrer durch Betätigung des Lenkrads vorgegebenen Lenkwunsch, der wirksame Lenkwinkel an den Rädern größer oder kleiner ausfällt. Im Rahmen der Fahrstabilisierungsfunktionen können zur Stabilisierung des Fahrzeugs fahrerunabhängige Lenkeingriffe durchgeführt werden.
- Eine Hinterachsschräglaufregelung (HSR) mit der mittels Einstellen des Schräglaufwinkels in die Querdynamik des Fahrzeugs eingegriffen werden kann.

Vorzugsweise handelt es sich bei den berücksichtigen bzw. ausgewerteten elektrischen Verbrauchern um sicherheitsrelevante Steuer- und/oder Regelungseinrichtungen. Im Gegensatz zu nicht sicherheitsrelevanten Steuer- und/oder Regelungseinrichtungen müssen sicherheitsrelevante Steuer- und/oder Regelungseinrichtungen an sie gestellte Sicherheitsstandards erfüllen. Hierbei handelt es sich um spezifizierte Sicherheitsanforderungsstufen, die sogenannten "Automotitve Safety Integrety Level" (ASIL). Dies führt dazu, dass eine Energiespeicherzustandserkennung bzw. Energiespeicherdiagnose, die darauf basiert, dass hierzu, vorzusgsweise ausschließlich, sicherheitsrelevante Steuer- und/oder Regelungseinrichtungen berücksichtigt bzw. ausgewertet werden, als ebenfalls diese Sicherheitsstandards erfüllend angesehen werden kann. Es ist somit möglich, den Energiespeicherzustand nach den für sicherheitsrelevanten Steuer- und/oder Regelungseinrichtungen geltenden Sicherheitsstandards zu ermitteln, weshalb das dabei erzielte Ergebnis wiederum im Zusammenhang mit der Ansteuerung sicherheitsrelevanter Steuer- und/oder Regelungseinrichtungen verwendet werden kann, da diese eine Energiespeicherdiagnose mit einer hohen Zuverlässigkeit fordern.

Was die Ausstattung des Fahrzeugs mit Steuer- und/oder Regelungseinrichtungen angeht, so sind hierbei beliebige Ausstattungskonstellationen denkbar, angefangen von einer ersten Konstellation mit ausschließlich nicht sicherheitsrelevanten Steuer- und/oder Regelungseinrichtungen, über eine Mischkonstellation bis hin zu einer zweiten Konstellation mit ausschließlich sicherheitsrelevanten Steuer- und/oder Regelungseinrichtungen. Bei einem mit Mischkonstellation ausgestatteten Fahrzeug kann vorteilhafterweise vorgesehen sein, dass in der Erkennungseinheit beim Ermitteln der Energiespeicherzustandsgröße für den Fall, dass sowohl von sicherheitsrelevanten als auch von nicht sicherheitsrelevanten Steuer- und/oder Regelungseinrichtungen Versorgungszustandsgrößen bereitgestellt werden, lediglich die sicherheitsrelevanten Steuer- und/oder Regelungseinrichtungen bereitgestellten Versorgungszustandsgrößen berücksichtigt werden. Werden dagegen nur von nicht sicherheitsrelevanten Steuer- und/oder Regelungseinrichtungen Versorgungszustandsgrößen bereitgestellt, dann erfolgt das Ermitteln der Energiespeicherzustandsgröße auch anhand dieser Größen. Beim Ermitteln der Energiespeicherzustandsgröße kann somit berücksichtigt werden, welche der Steuer- und Regelungseirichtungen eine Versorgungszustandsgröße bereitstellt bzw. aktiv ist.

In einer weiteren Ausgestaltung der Erfindung ist die Erkennungseinheit ferner dazu ausgebildet, beim Ermitteln der Energiespeicherzustandsgröße zu berücksichtigen, wie viele der Steuer- und/oder Regelungseinrichtungen aktiv sind. Dies ermöglicht eine noch genauere und somit zuverlässigere Energiespeicherzustandserkennung bzw. Energiespeicherdiagnose, da der Versorgungszustand einer Steuer- und/oder Regelungseinrichtung und somit die für sie ermittelte Versorgungszustandsgröße in Abhängigkeit davon variiert, wie viele Steuer- und/oder Regelungseinrichtungen zum Zeitpunkt des Ermittelns der Versorgungszustandsgröße aktuell durch den Energiespeicher gespeist werden.

Vorteilhafterweise handelt es sich bei der Versorgungszustandsgröße um zumindest eine der folgenden Größen: eine Spannungsgröße, die eine an dem Verbraucher anliegende Versorgungsspannung repräsentiert; eine Stromgröße, die einen von dem Verbraucher aufgenommenen Strom repräsentiert; eine in Abhängigkeit der Spannungsgröße und/oder der Stromgröße ermittelte Logikgröße. Insbesondere der für einen elektrischen Verbraucher gegebene, betriebsbedingte Verlauf seiner Versorgungsspannung kann als Maß für den Zustand des Energiespeichers herangezogen werden, durch den die Speisung des elektrischen Verbrauchers erfolgt. Kommt es beispielsweise bei einem aktiven elektrischen Verbraucher, also dann, wenn beispielsweise eine Steuer- und/oder Regelungseinrichtung gemäß einem in ihr hinterlegten Steuer- und/oder Regelalgorithmus einen Lenk- oder Bremseneingriff durchführt, zu einem deutlichen Einbruch in der Versorgungsspannung, so deutet dies darauf hin, dass der Energiespeicher zumindest in diesem Augenblick nicht in vollem Umfang bzw. gar nicht funktionsfähig ist. Gründe hierfür kann es viele geben. So kann der Energiespeicher schlichtweg nicht ausreichend aufgeladen sein. Es kann aber auch sein, dass der Energiespeicher aufgrund seines Alters nur noch über eine eingeschränkte Ladekapazität verfügt. Alternativ kann der Spannungseinbruch auch daher rühren, dass ein mechanischer Fehler bei dem Energiespeicher aufgetreten ist, beispielsweise kann einer seiner Pole gebrochen sein, ein Wackelkontakt vorliegen oder eine seiner Speicherzellen kurzgeschlossen sein. Vorteilhafterweise repräsentiert die Versorgungszustandsgröße den Wert der an dem elektrischen Verbraucher anliegenden Versorgungsspannung. Alternativ, jedoch eher ergänzend, wird der betriebsbedingte Verlauf des von dem elektrischen Verbraucher aufgenommenen Stroms erfasst. Auch dieser kann als ein Maß für den Zustand des Energiespeichers herangezogen werden, der diesen Strom liefert. Vorzugsweise werden sowohl der betriebsbedingte Verlauf der Versorgungsspannung als auch der betriebsbedingte Verlauf des von dem elektrischen Verbraucher aufgenommenen Stroms erfasst, wobei der zusätzlich berücksichtigte Strom vorteilhafterweise zu Plausibilisierungszwecken verwendet wird. Nimmt beispielsweise ein elektrischer Verbraucher im Rahmen eines von ihm durchgeführten Eingriffs einen Strom einer bestimmten Größenordnung auf, so sind in einem gewissen Umfang Einbrüche in der Versorgungsspannung zu erwarten und somit vertretbar (beispielsweise wenn eine elektrische Servolenkung im Bereich des Endanschlags einen Eingriff durchführt). Ein Verdacht auf einen Fehler des Energiespeichers wäre dagegen jedoch gegeben, wenn bei einem von dem elektrischen Verbraucher aufgenommenen, sehr viel geringeren Strom ein entsprechender Einbruch in der Versorgungsspannung eintreten würde (beispielsweise wenn eine elektrische Servolenkung in einem von dem Endanschlag weit entfernten Bereich einen Eingriff durchführt). Diese Plausibilisierung kann in der Erkennungseinheit durchgeführt werden. Vorzugsweise kann sie aber auch in den jeweiligen Erfassungseinheiten der elektrischen Verbraucher durchgeführt werden, in diesem Fall würde dann von dem elektrischen Verbraucher die vorstehend erwähnte Logikgröße bereitgestellt werden.

Konsequenterweise kann es sich bei den Erfassungseinheiten um in den jeweiligen Steuer- und/oder Regelungseinrichtungen verbaute Stromsensoren und/oder Spannungssensoren handeln, wobei die Stromsensoren vorzugsweise als Shunt-Widerstände ausgeführt sind. Hinsichtlich des Erfassens des Wertes der anliegenden Versorgungsspannung kann auch ein entsprechend ausgebildeter Analog-Digital-Wandler zum Einsatz kommen. Was das Bereitstellen der Logikgrößen angeht, so kann eine entsprechende ausgebildete Auswertelogik vorhanden sein. Es können aber auch entsprechend ausgebildete Schätzmodelle eingesetzt werden.

In einer weiteren Ausgestaltung der Erfindung ist die Erkennungseinheit dazu ausgebildet, die Energiespeicherzustandsgröße durch einen Vergleich zumindest einer Versorgungszustandsgröße mit einem Referenzwert zu ermitteln. Dadurch lässt sich in unaufwändiger Art und Weise der Energiespeicherzustand erkennen. Diese Vorgehensweise bietet sich insbesondere dann an, wenn es sich bei der Versorgungszustandsgröße um die an dem elektrischen Verbraucher anliegende Versorgungsspannung handelt. Vorteilhafterweise kann der heranzuziehende Referenzwert in Abhängigkeit davon bestimmt oder ausgewählt werden, welcher elektrische Verbraucher die Versorgungszustandsgröße bereitstellt. Weicht der Wert der Versorgungszustandsgröße von dem Referenzwert ab, ist dies ein Hinweis auf einen bei dem Energiespeicher vorliegenden Fehler.

In einer weiteren Ausgestaltung der Erfindung ist die Erkennungseinheit ferner dazu ausgebildet, zumindest eine Konditionierungsgröße zu ermitteln, in deren Abhängigkeit für zumindest eine der Steuer- und/oder Regelungseinrichtungen deren Arbeitsweise beeinflussbar ist. Vorzugsweise kann die Konditionierungsgröße dazu verwendet werden, einen von der Steuer- und/oder Regelungseinrichtung durchzuführenden Eingriff zu modifizieren. Im Vergleich zu der Vorgehensweise, beispielsweise bei einem festgestellten Einbruch in der Versorgungsspannung und somit einem ggf. nicht mehr voll funktionsfähigen Energiespeicher einen elektrischen Verbraucher abzuschalten und somit auf die von ihm durchgeführten Eingriffe zu verzichten, hat diese Vorgehensweise den Vorteil, dass die Eingriffe immerhin noch durchgeführt werden, wenn auch nicht in vollem Umfang bzw. in voller Stärke. Dies hat wiederum den Vorteil, dass es durch die modifizierten Eingriffe nicht zu so starken Einbrüchen in der Versorgungsspannung. Diese Vorgehensweise bietet sich insbesondere bei einer elektrischen Servolenkung an.

in einer weiteren Ausgestaltung der Erfindung weist die Vorrichtung ferner einen Energiespeichersensor auf, der dazu ausgebildet ist, zumindest eine Betriebszustandsgröße des Energiespeichers zu erfassen. Vorzugsweise erfasst dieser Sensor zumindest die Energiespeichertemperatur, so dass eine weitere Größe zur Verfügung steht, die in der Erkennungseinheit bei der Ermittlung des Energiespeicherzustands berücksichtigt werden kann, wodurch die Güte der Erkennung erhöht wird. Die Erfassung der Energiespeichertemperatur ist mit keinem zusätzlichen Aufwand verbunden, da Energiespeicher für gewöhnlich mit einem entsprechenden Sensor ausgestattet sind. Vorteilhafterweise kann der Sensor derart ausgebildet sein, dass neben der Energiespeichertemperatur ferner noch die Energiespeicherspannung und der Energiespeicherstrom erfasst werden kann, was mit Blick auf die von den elektrischen Verbrauchern bereitgestellten Versorgungszustandsgrößen zu einer gewissen Redundanz und somit weiteren Erhöhung der Güte der Energiespeicherzustandserkennung führt.

In einer weiteren Ausgestaltung der Erfindung kann es sich bei der Anwendung der Vorrichtung bzw. des Verfahrens um das Erkennen des Zustands einer in einem Fahrzeugbordnetz enthaltenen Bordnetz- bzw. Starterbatterie handeln. Die elektrischen Verbraucher stellen Bordnetzteilnehmer dar, die als sicherheitsrelevante Steuer- und/oder Regelungseinrichtungen ausgebildet sind. Mit dieser Ausgestaltung kann der Ladezustand und/oder der Alterungszustand und/oder die Funktionalität der Bordnetz- bzw. Starterbatterie ermittelt werden.

Die Erkennungseinheit kann baulich auf unterschiedliche Art und Weise realisiert sein. Beispielsweise kann sie als eine baulich eigenständige Einheit realisiert sein, die im Fahrzeug räumlich getrennt von den elektrischen Verbrauchern angeordnet ist. Alternativ kann die Erkennungseinheit aber auch in einem der elektrischen Verbraucher oder in dem Energiespeicher implementiert sein.

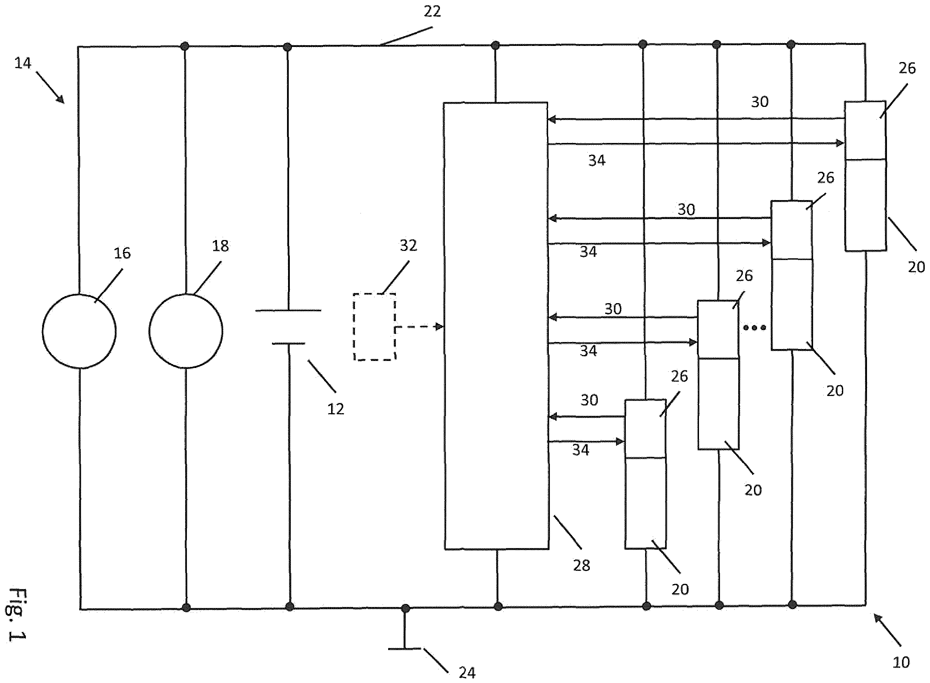

Ausführungsbeispiele der Erfindung sind in der Zeichnung dargestellt und werden in der nachfolgenden Beschreibung näher erläutert, wobei die Zeichnung aus einer einzigen Figur 1 besteht, die eine schematische Darstellung der Vorrichtung zeigt.

In Fig. 1 ist eine in ihrer Gesamtheit mit der Bezugsziffer 10 bezeichnete Vorrichtung zum Erkennen eines Zustands eines in einem (nicht dargestellten) Fahrzeug angeordneten Energiespeichers 12 dargestellt. In der Vorrichtung 10 läuft ein entsprechendes Verfahren ab. Der Energiespeicher 12 ist Teil eines Bordnetzes 14, das neben dem Energiespeicher 12 einen Generator 16, einen Starter 18 und eine Anzahl elektrischer Verbraucher 20 aufweist. Der Starter 18 ist dazu ausgebildet, einen nicht dargestellten Verbrennungsmotor zu starten. Der Generator 16 wiederum ist mit dem Verbrennungsmotor wirktechnisch verbunden und dazu ausgebildet, während des Fahrbetriebs des Fahrzeuges den Energiespeicher 12 zu laden. Der Energiespeicher 12 kann als Batterie, die sogenannte Starterbatterie ausgebildet sein. Der Energiespeicher 12 kann aber auch als Hochleistungskondensator ausgebildet sein, ein sogenannter Super-Cap. Die elektrischen Verbraucher 20, bei denen es sich um die Bordnetzteilnehmer handelt, sind verteilt im Fahrzeug, d.h. an unterschiedlichen Einbauorten im Fahrzeug angeordnet. Wie der Darstellung in Fig. 1 zu entnehmen ist, sind die elektrischen Verbraucher 20 zum einen an eine Versorgungsspannung 22 und zum anderen an eine Fahrzeugmasse 24 angeschlossen. Die elektrischen Verbraucher 20 weisen eine Erfassungseinheit 26 auf, die dazu ausgebildet ist, zumindest eine Versorgungszustandsgröße zu ermitteln, die einen Versorgungszustand des jeweiligen elektrischen Verbrauchers 20 repräsentiert oder charakterisiert, der beim Speisen des elektrischen Verbrauchers 20 durch den Energiespeicher 12 auftritt. Bei der Versorgungszustandsgröße kann es sich um eine Spannungsgröße handeln, die die an dem elektrischen Verbraucher 20 anliegende Versorgungsspannung 22 repräsentiert, und/oder um eine Stromgröße handeln, die einen von dem elektrischen Verbraucher 20 aufgenommenen Strom repräsentiert, und/oder um eine in Abhängigkeit der Spannungsgröße und/oder der Stromgröße ermittelte Logikgröße.

Die Versorgungszustandsgrößen werden ausgehend von den elektrischen Verbrauchern 20 einer Erkennungseinheit 28 zugeführt, was durch Pfeile 30 angedeutet ist. In der Erkennungseinheit 28 werden in Abhängigkeit der ihr zugeführten Versorgungszustandsgrößen eine Energiespeicherzustandsgröße ermittelt, die den Zustand des Energiespeichers 12 repräsentiert. Die Vorrichtung kann ferner einen Energiespeichersensor 32 aufweisen, mit dem eine Betriebszustandsgröße des Energiespeichers 12 erfasst werden kann, die dann in der Erkennungseinheit 28 beim Ermitteln der Energiespeicherzustandsgröße berücksichtigt wird. Diese Ausstattungsoption ist in Fig. 1 durch die strichlinierte Darstellung des Energiespeichersensors 32 angedeutet. Bei der erfassten Betriebszustandsgröße kann es sich beispielsweise um die Energiespeichertemperatur und/oder um die Energiespeicherspannung und/oder um den Energiespeicherstrom handeln.

Bei den elektrischen Verbrauchern 20 kann es sich um Steuer- und/oder Regelungseinrichtungen handeln, mit denen jeweils eine das Fahrverhalten des Fahrzeugs kennzeichnende und/oder beeinflussende Größe einstellbar ist. Bei den Steuer- und/oder Regelungseinrichtungen kann es sich wiederum um sicherheitsrelevante Steuer- und/oder Regelungseinrichtungen oder um nicht sicherheitsrelevante Steuer- und/oder Regelungseinrichtungen handeln. Wie bereits ausgeführt, repräsentiert oder charakterisiert die jeweilige Versorgungszustandsgröße den Versorgungszustand des jeweiligen elektrischen Verbrauchers 20 beim Speisen durch den Energiespeicher 12. Bei den Steuer- und/oder Regelungseinrichtungen soll die Versorgungszustandsgröße vorzugsweise den Versorgungszustand der jeweiligen Einrichtung in deren aktiven Zustand repräsentieren oder charakterisieren, also dann, wenn die Einrichtung gemäß einem in ihr hinterlegten Steuer- und/oder Regelalgorithmus einen Eingriff durchführt, bei einer sicherheitsrelevanten Steuer- und/oder Regelungseinrichtung also beispielsweise einen Lenk- oder Bremseneingriff.

Die Energiespeicherzustandsgröße kann in der Erkennungseinheit 28 mittels eines Vergleichs zumindest einer Versorgungszustandsgröße mit einem Referenzwert ermittelt werden. Zur Verbesserung der Güte der Energiespeicherzustandserkennung kann die Erkennungseinheit 28 ferner berücksichtigen, wie viele der elektrischen Verbraucher 20 bzw. Steuer- und/oder Regelungseinrichtungen aktiv sind.

In der Erkennungseinheit 28 kann eine Konditionierungsgröße ermittelt werden, vorzugsweise in Abhängigkeit der Energiespeicherzustandsgröße und besonders vorzugsweise für jeden der elektrischen Verbraucher 20 individuell. Die Konditionierungsgröße wird dann zumindest einem elektrischen Verbraucher 20 bzw. einer der Steuer- und/oder Regelungseinrichtungen zugeführt, was durch Pfeile 34 angedeutet ist, um für zumindest eine der Steuer- und/oder Regelungseinrichtungen deren Arbeitsweise zu beeinflussen, beispielsweise derart, dass diese modifizierte Eingriffe durchführt.

Für die nachfolgende Betrachtung sei angenommen, dass das Fahrzeug mit folgenden elektrischen Verbrauchern ausgestattet ist, die jeweils eine Versorgungszustandsgröße bereitstellen können: eine elektrische Servolenkung, eine Fahrstabilitätseinrichtung DSC und eine elektrische Parkbremse. Ergänzend kann das Fahrzeug über eine aktive Vorderradlenkeinrichtung oder eine Hinterachsschräglaufregelung verfügen.

Es sei nun angenommen, dass die Starterbatterie nicht mehr startfähig ist, und somit der Verbrennungsmotor des Fahrzeugs mittels Starthilfe gestartet werden muss. Die nicht mehr startfähige Starterbatterie liefert dann über einen längeren Zeitraum keinen Beitrag zur Bordnetzstabilität, da diese zunächst aufgeladen werden muss. Somit würde eine allein auf dem Batteriestrom und/oder der Batteriespannung basierende, modellgestützte Batteriediagnose erst nach einer längeren Zeitdauer, die von der modellgestützten Diagnose herrührt, erkennen lassen, dass ein problematischer Batteriezustand vorliegt und folglich innerhalb dieses Zeitraums keine verlässlichen Diagnoseergebnisse liefern. Stattdessen kann die erfindungsgemäße, verteilte Batteriediagnose unverzüglich Informationen über den Zustand der Starterbatterie bereitstellen und folglich verlässliche Ergebnisse liefern. Die Gründe hierfür sind folgende: Die elektrische Servolenkung erkennt Spannungseinbrüche bei direkt nach der Starthilfe erfolgenden Parkiermanövern. Die Fahrstabilitätseinrichtung DSC erkennt beispielsweise bei einem im Winter liegen gebliebenen Fahrzeug Traktionsprobleme, möchte eingreifen, erkennt dann jedoch Spannungseinbrüche. Die elektrische Parkbremse erkennt Spannungseinbrüche beim Lösen der Bremse. Die aktive Vorderradlenkeinrichtung oder die Hinterachsschräglaufregelung erkennen Spannungseinbrüche beim Parkieren. Somit ist mit der erfindungsgemäßen Vorrichtung bzw. dem erfindungsgemäßen Verfahren ein situationsbedingt schnelleres Erkennen des Zustands eines Energiespeichers bzw. eine schnellere Energiespeicherdiagnose möglich.

Auch mit Blick auf intelligente Bordnetzenergiemanagementsysteme bietet die erfindungsgemäße Vorrichtung bzw. das erfindungsgemäße Verfahren gegenüber bisher bekannten Vorrichtungen bzw. Verfahren Vorteile. Als Beispiel sei hier der Rekuperationsbetrieb des Fahrzeuges genannt. Je nachdem, ob eine Schub- oder Zugphase des Fahrzeugs vorlag, ist der Generator entweder vollständig erregt oder vollständig entregt. Hochdynamische Verbraucher können daher in diesem Zeitraum, und zwar dann, wenn in solch einer Situation die Batterie defekt oder beispielsweise durch einen Fehler in einer Zuleitung abgeklemmt ist, zu sicherheitsrelevanten Spannungseinbrüchen im Fahrzeug führen, die mit der erfindungsgemäßen Vorrichtung bzw. mit dem erfindungsgemäßen Verfahren unmittelbar erkannt und entsprechend berücksichtigt werden können. Bisherige Vorrichtungen bzw. Verfahren würden hierfür einen längeren Zeitraum benötigen, da strom- oder spannungsbasierte Verläufe betriebsbedingt durch das Energiemanagement verfälscht werden könnten. Somit ist mit der erfindungsgemäßen Vorrichtung bzw. dem erfindungsgemäßen Verfahren auch bei einem intelligenten Bordnetzenergiemanagement eine verlässliche Energiespeicherdiagnose möglich.

Abschließend sei noch festgehalten, dass die in Fig. 1 gewählte Darstellung keine einschränkende Wirkung haben soll, insbesondere mit Blick auf die bauliche Ausgestaltung der Erkennungseinheit, die baulich eigenständig oder als Teil eines elektrischen Verbrauchers oder als Teil des Energiespeichers ausgeführt sein kann.

### Bezugszeichenliste

- 10: Vorrichtung
- 12: Energiespeicher
- 14: Bordnetz
- 16: Generator
- 18: Starter
- 20: elektrische Verbraucher
- 22: Versorgungsspannung
- 24: Fahrzeugmasse
- 26: Erfassungseinheit
- 28: Erkennungseinheit
- 30: Pfeil
- 32: Energiespeichersensor
- 34: Pfeil

## Patentansprüche

1. Vorrichtung die dazu ausgebildet ist, einen Zustand eines in einem Fahrzeug angeordneten Energiespeichers (12) zu erkennen, wobei das Fahrzeug eine Anzahl von im Fahrzeug verteilt angeordneter, von dem Energiespeicher (12) gespeister elektrischer Verbraucher (20) aufweist, wobei es sich bei den elektrischen Verbrauchern (20) um Steuer- und/oder Regelungseinrichtungen handelt, mit denen jeweils eine das Fahrverhalten des Fahrzeugs kennzeichnende und/oder beeinflussende Größe einstellbar ist, und wobei die elektrischen Verbraucher (20) jeweils eine Erfassungseinheit (26) aufweisen, wobei die Erfassungseinheiten (26) dazu ausgebildet sind, zumindest eine Versorgungszustandsgröße zu ermitteln, die einen Versorgungszustand des jeweiligen elektrischen Verbrauchers (20) repräsentiert oder charakterisiert, der beim Speisen des elektrischen Verbrauchers (20) durch den Energiespeicher (12) auftritt, wobei die Vorrichtung (10). ferner eine Erkennungseinheit (28) aufweist, die dazu ausgebildet ist, in Abhängigkeit zumindest einer ihr zugeführten Versorgungszustandsgröße eine Energiespeicherzustandsgröße zu ermitteln, die den Zustand des Energiespeichers (12) repräsentiert.

2. Vorrichtung nach Anspruch 1, **dadurch gekennzeichnet, dass** es sich um sicherheitsrelevante Steuer- und/oder Regelungseinrichtungen handelt.

3. Vorrichtung nach einem der vorstehenden Ansprüche, **dadurch gekennzeichnet, dass** die Erkennungseinheit (28) ferner dazu ausgebildet ist, beim Ermitteln der Energiespeicherzustandsgröße zu berücksichtigen, wie viele der Steuer- und/oder Regelungseinrichtungen aktiv sind.

4. Vorrichtung nach einem der vorstehenden Ansprüche, **dadurch gekennzeichnet, dass** es sich bei der Versorgungszustandsgröße um zumindest eine der folgenden Größen handelt: eine Spannungsgröße, die eine an dem elektrischen Verbraucher (20) anliegende Versorgungsspannung repräsentiert; eine Stromgröße, die einen von dem elektrischen Verbraucher (20) aufgenommenen Strom repräsentiert; eine in Abhängigkeit der Spannungsgröße und/oder der Stromgröße ermittelte Logikgröße.

5. Vorrichtung nach einem der vorstehenden Ansprüche, **dadurch gekennzeichnet, dass** die Erkennungseinheit (28) dazu ausgebildet ist, die Energiespeicherzustandsgröße durch einen Vergleich zumindest einer Versorgungszustandsgröße mit einem Referenzwert zu ermitteln.

6. Vorrichtung nach einem der vorstehenden Ansprüche, **dadurch gekennzeichnet, dass** die Erkennungseinheit (28) ferner dazu ausgebildet ist, zumindest eine Konditionierungsgröße zu ermitteln, in deren Abhängigkeit für zumindest eine der Steuer- und/oder Regelungseinrichtungen deren Arbeitsweise beeinflussbar ist.

7. Vorrichtung nach einem der vorstehenden Ansprüche, **dadurch gekennzeichnet, dass** die Vorrichtung (10) ferner einen Energiespeichersensor (32) aufweist, der dazu ausgebildet ist, zumindest eine Betriebszustandsgröße des Energiespeichers (12) zu erfassen.

8. Verfahren zum Erkennen eines Zustands eines in einem Fahrzeug angeordneten Energiespeichers (12), wobei das Fahrzeug eine Anzahl von im Fahrzeug verteilt angeordneter, von dem Energiespeicher (12) gespeister elektrischer Verbraucher (20) aufweist, wobei es sich bei den elektrischen Verbrauchern (20) um Steuer- und/oder Regelungseinrichtungen handelt, mit denen jeweils eine das Fahrverhalten des Fahrzeugs kennzeichnende und/oder beeinflussende Größe einstellbar ist, und wobei die elektrischen Verbraucher (20) jeweils eine Erfassungseinheit (26) aufweisen, mit den Schritten:
- Ermitteln zumindest einer Versorgungszustandsgröße mit einer der Erfassungseinheiten (26), wobei die Versorgungszustandsgröße einen Versorgungszustand des jeweiligen elektrischen Verbrauchers (20) repräsentiert oder charakterisiert, der beim Speisen des elektrischen Verbrauchers (20) durch den Energiespeicher (12) auftritt,
- Zuführen zumindest einer Versorgungszustandsgröße zu einer Erkennungseinheit (28), und
- Ermitteln einer Energiespeicherzustandsgröße in der Erkennungseinheit (28), in Abhängigkeit der zumindest einen zugeführten Versorgungszustandsgröße, wobei die Energiespeicherzustandsgröße den Zustand des Energiespeichers (12) repräsentiert.

9. Computerprogrammprodukt mit einem Datenträger mit Programmcode, der dazu ausgebildet ist, ein Verfahren nach Anspruch 8 durchzuführen, wenn der Programmcode in einer Vorrichtung nach einem der Ansprüche 1 bis 7 abläuft.

## Claims

1. A device which is designed to recognise a state of an energy store (12) arranged in a vehicle, wherein the vehicle has a number of electrical consumers (20) arranged distributed in the vehicle which are fed by the energy store (12), wherein the electrical consumers (20) are open-loop and/or closed-loop means with which in each case a variable which denotes and/or influences the handling characteristics of the vehicle can be set, and wherein the electrical consumers (20) in each case have a detection unit (26), wherein the detection units (26) are designed to ascertain at least one supply state variable which represents or characterises a supply state of the respective electrical consumer (20) which occurs when the electrical consumer (20) is fed by the energy store (12), wherein the device (10) further has a recognition unit (28) which is designed, as a function of at least one supply state variable which is supplied to it, to ascertain an energy store state variable which represents the state of the energy store (12).

2. A device according to Claim 1, **characterised in that** the means are safety-related open-loop and/or closed-loop means.

3. A device according to one of the preceding claims, **characterised in that** the recognition unit (28) is further designed to take into account when ascertaining the energy store state variable how many of the open-loop and/or closed-loop means are active.

4. A device according to one of the preceding claims, **characterised in that** the supply state variable is at least one of the following variables: a voltage variable which represents a supply voltage applied to the electrical consumer (20); a current variable which represents a current picked up by the electrical consumer (20); a logic variable which is ascertained as a function of the voltage variable and/or the current variable.

5. A device according to one of the preceding claims, **characterised in that** the recognition unit (28) is designed to ascertain the energy store state variable by a comparison of at least one supply state variable with a reference value.

6. A device according to one of the preceding claims, **characterised in that** the recognition unit (28) is further designed to ascertain at least one conditioning variable as a function of which for at least one of the open-loop and/or closed-loop means the method of operation thereof can be influenced.

7. A device according to one of the preceding claims, **characterised in that** the device (10) further has an energy store sensor (32) which is designed to detect at least one operating state variable of the energy store (12).

8. A method for recognising a state of an energy store (12) arranged in a vehicle, wherein the vehicle has a number of electrical consumers (20) arranged distributed in the vehicle which are fed by the energy store (12), wherein the electrical consumers (20) are open-loop and/or closed-loop means with which in each case a variable which denotes and/or influences the handling characteristics of the vehicle can be set, and wherein the electrical consumers (20) in each case have a detection unit (26), having the steps:
- ascertaining at least one supply state variable with one of the detection units (26), wherein the supply state variable represents or characterises a supply state of the respective electrical consumer (20) which occurs when the electrical consumer (20) is fed by the energy store (12),
- supplying at least one supply state variable to a recognition unit (28), and
- ascertaining an energy store state variable in the recognition unit (28), as a function of the at least one supplied supply state variable, wherein the energy store state variable represents the state of the energy store (12).

9. A computer program product with a data medium with program code which is designed to carry out a method according to Claim 8 if the program code is executed in a device according to one of Claims 1 to 7.

## Revendications

1. Dispositif réalisé pour identifier l'état d'un accumulateur d'énergie (12) installé dans un véhicule,
ce véhicule comprenant un ensemble de consommateurs électriques (20) répartis dans celui-ci, alimentés par l'accumulateur d'énergie (12), ces consommateurs électriques (20) étant constitués par des dispositifs de commande et/ou de régulation avec lesquels une grandeur caractérisant et/ou influençant le comportement de conduite du véhicule peut respectivement être réglée, et les consommateurs électriques (20) comportant chacun une unité de détection (26), ces unités de détection (26) étant réalisées pour permettre d'évaluer au moins une grandeur d'état d'approvisionnement qui représente ou caractérise l'état d'approvisionnement de chaque consommateur électrique (20), qui, se présente lors de l'alimentation du consommateur électrique (20) par l'accumulateur d'énergie (12), le dispositif (10) comprenant en outre une unité d'identification (28) qui est réalisée pour permettre, en fonction d'au moins une grandeur d'état d'approvisionnement qui lui est transmise d'évaluer une grandeur d'état de l'accumulateur d'énergie qui représente l'état de l'accumulateur d'énergie (12).

2. Dispositif conforme à la revendication 1,
**caractérisé en ce qu'**
il est constitué par des installations de commande et/ou de régulation importantes pour la sécurité.

3. Dispositif conforme à l'une des revendications précédentes,
**caractérisé en ce que**
l'unité d'identification (28) est en outre réalisée pour permettre lors de l'évaluation de la grandeur d'état de l'accumulateur d'énergie de prendre en considération la mesure dans laquelle les dispositifs de commande et/ou de régulation sont actifs.

4. Dispositif conforme à l'une des revendications précédentes,
**caractérisé en ce que**
la grandeur d'état d'alimentation est au moins l'une des grandeurs suivantes : une grandeur de tension qui représente la tension d'approvisionnement appliquée au consommateur électrique (20), une grandeur d'intensité de courant qui représente l'intensité de courant prélevée par le consommateur électrique (20), une grandeur logique évaluée en fonction de la grandeur de tension et/ou de la grandeur d'intensité de courant.

5. Dispositif conforme à l'une des revendications précédentes,
**caractérisé en ce que**
l'unité d'identification (28) est réalisée pour permettre d'évaluer la grandeur d'état de l'accumulateur d'énergie par la comparaison d'au moins une grandeur d'état d'approvisionnement avec une valeur de référence.

6. Utilisation conforme à l'une des revendications précédentes,
**caractérisée en ce que**
l'unité d'identification (28) est en outre réalisée pour permettre d'évaluer au moins une grandeur de conditionnement en fonction de laquelle le mode de travail d'au moins l'une des unités de commande et/ou de régulation peut être influencé.

7. Dispositif conforme à l'une des revendications précédentes,
**caractérisé en ce qu'**
il comporte en outre un capteur d'accumulateur d'énergie (32) qui est conçu pour permettre de détecter au moins une grandeur d'état de fonctionnement de l'accumulateur d'énergie (12).

8. Procédé permettant d'identifier l'état d'un accumulateur d'énergie (12) installé dans un véhicule, ce véhicule comprenant un ensemble de consommateurs électriques (20) répartis dans celui-ci, alimentés par l'accumulateur d'énergie (12), les consommateurs électriques (20) étant constitués par des dispositifs de commande et/ou de régulation à l'aide desquels une grandeur caractérisant et/ou influençant respectivement le comportement de conduite du véhicule peut être réglée, et les consommateurs électriques (20) comprenant chacun une unité de détection (26), ce procédé comprenant des étapes consistant à :
- évaluer au moins une grandeur d'état d'approvisionnement avec l'une des unités de détection (26), la grandeur d'état d'approvisionnement représentant ou caractérisant l'état d'approvisionnement d'un consommateur électrique (20) respectif qui se présente lors de l'alimentation de ce consommateur électrique (20) par l'accumulateur d'énergie (12),
- transmettre au moins une grandeur d'état d'approvisionnement à une unité d'identification (28), et
- évaluer une grandeur d'état de l'accumulateur d'énergie dans l'unité d'identification (28) en fonction de la grandeur d'état d'approvisionnement transmise, la grandeur d'état de l'accumulateur d'énergie représentant l'état de l'accumulateur d'énergie (12).

9. Produit-programme d'ordinateur comprenant un support de données avec un code de programme qui est réalisé pour permettre la mise en œuvre du procédé conforme à la revendication 8, lorsque le code de programme se déroule dans un dispositif conforme à l'une des revendications 1 à 7.
